(19) Europäisches Patentamt / European Patent Office / Office européen des brevets

(11) **EP 4 249 124 B1**

(12) **EUROPEAN PATENT SPECIFICATION**

(45) Date of publication and mention
of the grant of the patent:
**01.04.2026 Bulletin 2026/14**

(21) Application number: **22842377.8**

(22) Date of filing: **08.07.2022**

(51) International Patent Classification (IPC):
**B02C 4/08** *(2006.01)*     **B02C 4/30** *(2006.01)*

(52) Cooperative Patent Classification (CPC):
**B02C 4/08; B02C 4/30**

(86) International application number:
**PCT/KR2022/009900**

(87) International publication number:
**WO 2023/287115 (19.01.2023 Gazette 2023/03)**

(54) **ROLL MILL FOR SUPER ABSORBENT POLYMER AND METHOD FOR PREPARING SUPER ABSORBENT POLYMER USING THE SAME**

WALZENSTUHL FÜR SUPERABSORBIERENDES POLYMER UND VERFAHREN ZUR HERSTELLUNG EINES SUPERABSORBIERENDEN POLYMERS DAMIT

LAMINOIR POUR POLYMÈRE SUPER ABSORBANT ET PROCÉDÉ DE PRÉPARATION DE POLYMÈRE SUPER ABSORBANT L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2021 KR 20210091027**
**07.07.2022 KR 20220083939**

(43) Date of publication of application:
**27.09.2023 Bulletin 2023/39**

(73) Proprietor: **LG Chem, Ltd.**
**Seoul 07336 (KR)**

(72) Inventors:
• **BAEK, Seokhyeon**
**Daejeon 34122 (KR)**
• **KIM, Gicheul**
**Daejeon 34122 (KR)**
• **MIN, Yoon Jae**
**Daejeon 34122 (KR)**

(74) Representative: **Plasseraud IP**
**104 Rue de Richelieu**
**CS92104**
**75080 Paris Cedex 02 (FR)**

(56) References cited:
WO-A1-2017/039392     WO-A2-2006/062609
KR-A- 20110 131 131     KR-A- 20120 047 035
KR-A- 20120 047 035     US-A1- 2015 322 180
US-A1- 2017 189 575

**Description**

BACKGROUND OF THE INVENTION

(a) Field of the Invention

This invention relates to a roll mill for super absorbent polymer and a method for preparing super absorbent polymer using the same, and more specifically, to a roll mill for super absorbent polymer that can reduce particle size and realize narrow particle size distribution without increasing the amount of fine particles generated, by controlling specifications of a roll gap and roll corrugations, and a method for preparing super absorbent polymer using the same.

**(b) Description of the Related Art**

Super absorbent polymer(SAP) is polymer material in the form of white powder prepared by reacting acrylic acid with caustic soda, and it can absorb moisture of about five hundred to thousand times of its own weight. The super absorbent polymer is synthetic polymer material that is transformed to a jelly-like form, if it absorbs water, and can store water without discharging, even if a certain degree of pressure is applied from the outside.

Super absorbent polymer molecules have a network structure, and due to many pores between the molecules, easily absorb water. Due to concentration difference between ions in the super absorbent polymer and water, water moves inside super absorbent polymer (by osmosis). If water molecules are introduced inside super absorbent polymer, anions fixed inside try to occupy a specific space by repulsive force, and thus, the space of polymer chains expands and more water can be absorbed (electrostatic repulsion).

Such super absorbent polymer began to be commercialized as sanitary items, and currently, is being widely used as water-holding material for soil, water stop material for civil engineering and architecture, sheets for raising seedling, freshness preservatives in the field of food circulation, fomentation material, and the like, besides hygiene products such as paper diapers for children, and the like.

Recently, there is an increasing demand for rapid absorption speed of super absorbent polymer for improvement of performances of diapers, and the like. In order to increase absorption speed, a method of preparing porous particles through foaming, a method of increasing shear during chopping, or a method of increasing the surface area of particle, for example, by making particle diameter small through control of a roll gap are mainly used.

If a roll gap is reduced so as to prepare small particles, particle size distribution may become broad, thus causing unbalance between product properties and difficulty in surface treatment(for example, surface crosslinking). And, the rate of fine particles having particle size less than $150\mu$m may increase. Since the fine particles are reassembled by adding water, and then, recycled to drying/grinding/classifying process, as the amount of fine particles generated increases, process load may increase and productivity may be deteriorated.

KR 2012 0047035 A discloses a roll mill for super absorbent polymer according to the preamble of claim 1.

The background part has been described for better understanding of the background of the invention, and may comprise information other than prior art, already known to an ordinary skilled person in the art.

**SUMMARY OF THE INVENTION**

A roll mill according to the claimed invention is defined in claim 1. Dependent claims 2 to 5 define particular embodiments of the roll mill according to the claimed invention. Claims 6 and 7 define methods for preparing super absorbent polymer according to the claimed invention.

According to the embodiments of the invention, as defined in claim 1, there are provided a roll mill for super absorbent polymer that can reduce particle size and realize narrow particle size distribution without increasing the amount of fine particles generated, by controlling specifications of a roll gap and roll corrugations, and a method for preparing super absorbent polymer using the same.

The roll mill for super absorbent polymer according to the embodiment of the invention grinds introduced super absorbent polymer particles and discharges them. The roll mill for super absorbent polymer comprises one pair of rollers that have plural corrugations formed on each outer perimeter surface, and are arranged parallel to each other while being spaced by a roll gap, wherein plural corrugations are formed on the outer perimeter surface of the roller, and the number of corrugations per unit circumference of the roller is 0.89/mm ~ 1.15/mm.

The height of the corrugation may be $276\mu$m ~ $354\mu$m, and the pitch of the corrugation may be 0.87mm ~ 1.12mm.

According to the claimed invention, the roll gap is 0.10mm ~ 0.25mm.

According to another embodiment, the roll gap may be 0.10mm ~ 0.20mm.

The roll mill for super absorbent polymer further comprises another pair of rollers arranged upstream of the one pair of rollers according to the size of introduced super absorbent polymer particles.

Said another pair of rollers have different plural corrugations formed on each outer perimeter surface, and are arranged parallel to each other while being spaced by different roll gap, and the number of different corrugations per unit circumference of each roller is 0.25/mm ~ 0.38/mm.

The height of the different corrugation may be $950\mu m$ ~ 1400,um, and the pitch of the different corrugation may be 2.62mm ~ 3.93mm.

The different roll gap may be 0.20mm ~ 0.30mm.

The method for preparing super absorbent polymer according to the embodiment of the invention comprises steps of: polymerizing a monomer composition comprising water soluble ethylenically unsaturated monomers having at least partially neutralized acid groups, an internal crosslinking agent, and a polymerization initiator to prepare hydrogel polymer; chopping or micronizing the hydrogel polymer; drying the micronized hydrogel polymer to prepare dried super absorbent polymer particles; and grinding dried super absorbent polymer particles; wherein the grinding step is conducted using the roll mill according to the embodiment of the invention.

The method for preparing super absorbent polymer according to another embodiment of the invention comprises steps of: polymerizing a monomer composition comprising water soluble ethylenically unsaturated monomers having acid groups, an internal crosslinking agent, and a polymerization initiator to prepare hydrogel polymer; neutralizing at least a part of the acid groups of the polymer; micronizing the polymer in the presence of a surfactant to prepare hydrated super absorbent polymer particles; drying the hydrated super absorbent polymer particles to prepare dried super absorbent polymer particles; and grinding dried super absorbent polymer particles; wherein the grinding step is conducted using the roll mill according to the embodiment of the invention.

According to the embodiment of the invention, particle size can be reduced and narrow particle size distribution can be realized without increasing the amount of fine particles generated, by using rollers with increased number of corrugations.

And, while realizing the same particle distribution, a roll gap may be increased. Thus, collision of one pair of rollers may be decreased.

Besides, effects that can be obtained or expected from the examples of the invention will be directly disclosed or suggested in the detailed explanations of the embodiments of the invention. Namely, various effects expected according to the examples of the invention will be disclosed in the detailed description described later.

## BRIEF DESCRIPTION OF THE DRAWINGS

The embodiments of the invention will be better understood referring to the explanations below in relation to attached drawings where similar numeral references indicate identical or functionally similar elements.

Fig. 1 is a perspective view of the roll mill for super absorbent polymer according to the embodiment of the invention.
Fig. 2 is a schematic view showing the specifications of the rollers.

It should be understood that the drawings referred to above are not necessarily drawn to scale, and present simple expressions of various preferred characteristics illustrating the basic principle of the invention. For example, specific design characteristics comprising specific dimensions, directions, locations and shapes will be partly determined by specifically intended application and use environments.

## DETAILED DESCRIPTION OF THE EMBODIMENTS

The terms used herein are only to explain specific embodiments, and are not intended to limit the invention. A singular expression includes a plural expression thereof, unless it is expressly stated or obvious from the context that such is not intended. As used herein, the terms "comprise", "comprising", "contains", "containing", etc. are intended to designate the existence of practiced characteristic, number, step, constructional element or combinations thereof, and they are not intended to preclude the possibility of existence or addition of one or more other characteristics, numbers, steps, constructional elements or combinations thereof. As used herein, the term "and/or" includes one of enumerated items in connection, or all the combinations.

As used herein, the term "polymer" means a polymerized state of water soluble ethylenically unsaturated monomers, and it may include those of all moisture content ranges or particle diameter ranges. Among the polymers, polymer after polymerization and before drying, and having a moisture content of about 40 wt% or more, may be referred to as hydrogel polymer.

And, the term "super absorbent polymer" means the polymer or base resin itself, or is used to include the polymer or base resin made appropriate for productization through additional process, for example, surface crosslinking, fine particles reassembling, drying, grinding, classification, and the like.

The roll mill for super absorbent polymer according to the embodiment of the invention can reduce particle size and realize narrow particle size distribution without increasing the amount of fine particles generated, by using rollers with increased number of corrugations. And, since the number of corrugations of the roller is increased, even if a roll gap is increased, the same particle size may be realized.

Hereinafter, the roll mill for super absorbent polymer according to the embodiment of the invention will be explained in detail with reference to the attached drawings.

The roll mill for super absorbent polymer according to the embodiment of the invention is used in the grinding step in the preparation method of super absorbent polymer.

A method for preparing super absorbent polymer according to one example (preparation method 1) may comprise steps of: polymerizing a monomer composition comprising water soluble ethylenically unsaturated monomers having at least partially neutralized acid groups, an internal crosslinking agent, and a polymerization initiator to prepare hydrogel polymer; chopping or micronizing the hydrogel polymer; drying the micronized hydrogel polymer to prepare dried super absorbent polymer particles; and grinding dried super absorbent polymer particles.

A method for preparing super absorbent polymer according to another example (preparation method 2) may comprise steps of: polymerizing a monomer composition comprising water soluble ethylenically unsaturated monomers having acid groups, an internal crosslinking agent, and a polymerization initiator to prepare hydrogel polymer; neutralizing at least a part of the acid groups of the polymer; micronizing the polymer in the presence of a surfactant to prepare hydrated super absorbent polymer particles; drying the hydrated super absorbent polymer particles to prepare dried super absorbent polymer particles; and grinding dried super absorbent polymer particles.

In the preparation method 2, the step of conducting polymerization of the monomer composition to form polymer may be conducted in a batch type reactor.

And, in the polymerization step, a reducing agent forming a Redox couple with a polymerization initiator may be introduced together to initiate polymerization.

And, the step of neutralizing at least a part of the acid groups of the polymer, and the step of micronizing the polymer in the presence of a surfactant to prepare hydrated super absorbent polymer particles may be sequentially or simultaneously conducted.

And, the step of drying hydrated super absorbent polymer particles may be conducted by moving type drying.

As explained above, dried super absorbent polymer particles prepared through the polymerization step, micronizing step and drying step are ground through the grinding step using the grinding apparatus for super absorbent polymer according to the embodiment of the invention.

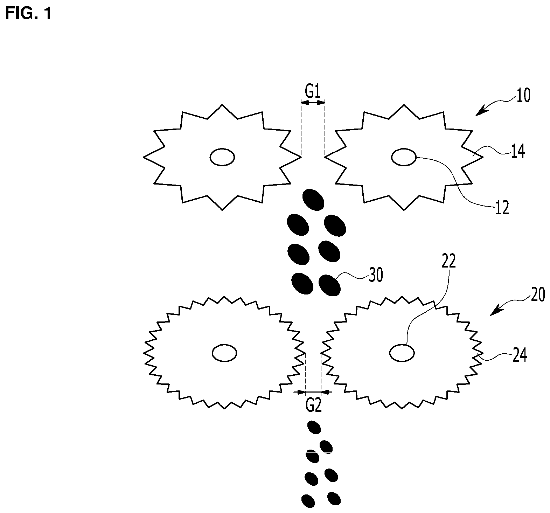

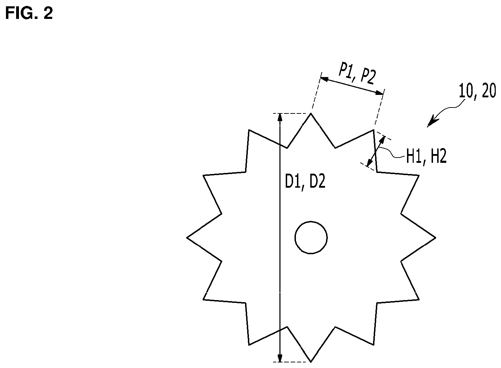

Hereinafter, referring to Fig. 1 and Fig. 2, the grinding apparatus for super absorbent polymer according to the embodiment of the invention will be explained in more detail. According to the embodiment of the invention, a roll mill having plural corrugations formed on the outer perimeter surface is used as the grinding apparatus.

Fig. 1 is a perspective view of the roll mill for super absorbent polymer according to the embodiment of the invention.

As shown in Fig. 1 and Fig. 2, the roll mill for super absorbent polymer according to the embodiment of the invention grinds introduced super absorbent polymer particles and discharges them. The roll mill comprises two pairs of rollers(10, 20). It is shown in Fig. 1 that the roll mill comprises one pair of first rollers(10) and one pair of second rollers (2). Only one pair of first rollers(10) may be included in examples not according to the claimed invention. Whether a roll mill comprising one pair of rollers(10) is used or a roll mill comprising two pairs of rollers(10, 20) is used, is determined according to the average size of super absorbent polymer particles introduced in the roll mill. For example, if the average size of super absorbent polymer particles introduced in the roll mill is relatively large(for example, about 1850$\mu$m or more), a roll mill comprising two pairs of roller(10, 20) may be used, and if the average size of super absorbent polymer particles introduced in the roll mill is relatively small(for example, less than about 1850$\mu$m), a roll mill comprising one pair of rollers(10) may be used.

Each roller(10, 20) is arranged so as to rotate around the rotation axis(12, 22), and plural corrugations(14, 24) are formed on the outer perimeter surface thereof. The first rollers(10) can rotate around the first rotation axis(12), and the second rollers(20) can rotate around the second rotation axis(22). Each roller(10, 20) may have a cylindrical shape with predetermined diameter and predetermined length. And, the shape and number of the plural corrugations(14, 24) may be predetermined. For example, the corrugations(14, 24) may have a sharp apex, but they are not limited thereto.

The diameter and length of the first rollers(20) may be identical to the diameter and length of the second rollers(20). And, the number of the first corrugations(14) formed on the outer perimeter surface of the first rollers(10) may be identical to or different from the number of the second corrugations(24) formed on the outer perimeter surface of the second rollers(20). As shown in Fig. 1, the number of the first corrugations(14) formed on the outer perimeter surface of the first rollers(10) may be different from the number of the second corrugations(24) formed on the outer perimeter surface of the second rollers(20), and it may be smaller than the number of the second corrugations(24).

Each pair of rollers(10, 20) are arranged parallel to each other while being spaced by a roll gap(G1, G2). Wherein, the roll gap(G1, G2) is the minimum distance between one pair of rollers(10, 20), for example, the minimum value among the distances between the apex of the corrugation(14) of one roller(10), and the apex of the corrugation(14) of the other roller(10) arranged parallel. One pair of first rollers(10) are arranged parallel to each other while being spaced by the first roll gap(G1), and one pair of second rollers(20) are arranged parallel to each other while being spaced by the second roll gap(G2). The first roll gap(G1) may be identical to or different from the second roll gap(G2).

One pair of the second rollers(20) is arranged downstream of the one pair of the first rollers(10)(For example, below one pair of the first rollers(10)). Thus, dried super absorbent polymer particles(30) may be fed between one pair of the first rollers(10) and primarily ground, and the primarily ground super absorbent polymer particles(30) may be fed again between one pair of the second rollers(20) and secondarily ground.

Fig. 2 is a schematic view showing the specifications of the roller.

As described above, since the diameter(D1) of the first roller(10) is identical to the diameter(D2) of the second roller(20) and the number of the first corrugations(14) is different from the number of the second corrugations(24), the specifications of the first corrugations(14) are different from the specifications of the second corrugations(24). Specifically, the first corrugation(14) has a first height(H1) and a first pitch(P1), and the second corrugation(24) has a second height(H2) and a second pitch(P2). Wherein, the height of the corrugation indicates a distance from an imaginary circle connecting the bases of the corrugations to the apex of the corrugation, and the pitch of the corrugation indicates a distance between the apexes of the corrugations.

According to the embodiment of the invention, the size of particles and the amount of fine particles generated through the roll mill are controlled by controlling the specifications of the corrugations. Since the diameters(D1, D2) of the first, second rollers(10, 20) used in the roll mill are identical, the specifications of corrugations are controlled by controlling the number of corrugations. However, the invention is not limited to the embodiments wherein the diameters(D1, D2) of the first, second rollers(10, 20) are identical. Thus, the specifications of corrugations may be controlled by controlling the number of corrugations per unit circumference.

According to one example, on a roller(10, 20) having a diameter(D1, D2) of 250mm, 250 corrugations(14, 24) may be formed. In this example, the number of corrugations per unit circumference is about 0.32/mm, and the height(H1, H2) of the corrugation(14, 24) is 1190$\mu$m, and the pitch(P1, P2) of the corrugations(14, 24) is 3.14mm.

According to another example, on a roller(10, 20) having a diameter(D2, D2) of 250mm, 500 corrugations(14, 24) may be formed. In this example, not according to the claimed invention, the number of corrugations per unit circumference is about 0.64/mm, and the height(H1, H2) of the corrugation(14, 24) is 530$\mu$m, and the pitch(P1, P2) of the corrugations(14, 24) is 1.57mm.

According to yet another example, on a roller(10, 20) having a diameter(D1, D2) of 250mm, 800 corrugations(14, 24) may be formed. In this example, the number of corrugations per unit circumference is about 1.02/mm, and the height(H1, H2) of the corrugation(14, 24) is 310$\mu$m, and the pitch(P1, P2) of the corrugations(14, 24) is 0.98mm.

As such, when the diameters of the rollers used in the roll mill for super absorbent polymer are identical, if the number of corrugations is determined, the specifications of corrugations are also determined.

As explained above, if the average size of super absorbent polymer introduced in the roll mill is relatively large(for example, about 1850$\mu$m or more), a roll mill comprising two pairs of the first, second rollers(10, 20) is used to sequentially reduce the particle size. Thus, the number of the first corrugations(14) of the first rollers(10) is smaller than the number of the second corrugations(24) of the second rollers(20). According to one example, the number of the first corrugations(14) of the first rollers(10) may be 250 (the number of corrugations per unit circumference is about 0.32/mm), and the number of the second corrugations(24) of the second rollers(20) may be 800(the number of corrugations per unit circumference is about 1.02/mm). In this example, the first height(H1) of the first corrugations(14) is 1190$\mu$m and the first pitch(P1) of the first corrugations(14) is 3.14mm, and the second height(H2) of the second corrugations(24) is 310$\mu$m and the second pitch(P2) of the second corrugations(24) is 0.98mm. According to another example, the number of the first corrugations(14) of the first rollers(10) may be about 200 ~ about 300 (the number of corrugations per unit circumference is about 0.25/mm ~ about 0.38/mm), and the number of the second corrugations(24) of the second rollers(20) may be about 700 ~ about 900 (the number of corrugations per unit circumference is about 0.89/mm ~ about 1.15/mm). In this example, the first height(H1) of the first corrugations(14) is about 950$\mu$m ~ about 1400$\mu$m and the first pitch(P1) of the first corrugations(14) is about 2.62mm ~ 3.93mm, and the second height(H2) of the second corrugations(24) is about 276$\mu$m ~ about 354$\mu$m and the second pitch(P2) of the second corrugations(24) is about 0.87mm ~ about 1.12mm.

And, in order to sequentially reduce particle size, the first roll gap(G1) between one pair of the first rollers(10) may be relatively large, and the second roll gap(G2) between one pair of the second rollers(20) may be relatively small. According to one example, the first roll gap(G1) between one pair of the first rollers(10) may be about 0.20mm ~ about 0.30mm. However, according to the embodiment of the invention, since the number of the second corrugations(24) of the second roller(20) is as large as 800 (the number of corrugations per unit circumference is about 1.02/mm), which is sufficient to produce small size particles, the second roll gap(G2) between one pair of the second rollers(20) may be set within a relatively wide range. For example, the second roll gap(G2) between one pair of the second rollers(20) may be about 0.10mm ~ about 0.25mm.

If the average size of super absorbent polymer particles introduced in the roll mill is relatively small(for example, less than about 1850$\mu$m), a roll mill comprising one pair of the first rollers(10) may be used. According to one example, the number of the first corrugations(14) of the first rollers(10) may be 800 (the number of corrugations per unit circumference is about 1.02/mm). In this example, the first height(H1) of the first corrugations(14) is 310$\mu$m, and the first pitch(P1) of the first corrugations(14) is 0.98mm. According to another example, the number of the first corrugations(14) of the first rollers(10) may be about 700 ~ about 900(the number of corrugations per unit circumference is about 0.89/mm ~ about 1.15/mm). In this example, the first height(H1) of the first corrugations(14) is about 276$\mu$m ~ about 354$\mu$m and the first pitch(P1) of the first corrugations(14) is about 0.87mm ~ about 1.12mm. And, the first roll gap(G1) between one pair of the first rollers(10) may be about 0.15mm ~ about 0.25mm.

According to the embodiment of the invention, particle size may be reduced and narrow particle size distribution may be realized without increasing the amount of fine particles generated, by increasing the number of corrugations of at least one pair of rollers included in the roll mill.

Thus, super absorbent polymer prepared according to the embodiment of the invention may have small weight average particle diameter(D50) of 300$\mu$m or more, or 320,um or more, or 330$\mu$m or more, or 340$\mu$m or more, or 350$\mu$m or more, and 440$\mu$m or less, or 420$\mu$m or less, or 410$\mu$m or less, or 400$\mu$m or less, or 380$\mu$m or less, or 370$\mu$m or less, or 360$\mu$m or less, as measured according to ERT420.2-02.

And, super absorbent polymer prepared according to the embodiment of the invention may comprise particles having particle diameters of 300$\mu$m or more and less than 400,um, in the content of 16 wt% or more, or 17 wt% or more, or 20 wt% or more, or 22 wt% or more, or 24 wt% or more, or 25 wt% or more, and 40 wt% or less, or 38 wt% or less, or 36 wt% or less, or 35 wt% or less, based on the total weight of super absorbent polymer, and thus, selectivity to particles having median particle diameters may increase to realize narrow particle size distribution.

And, super absorbent polymer prepared according to the embodiment of the invention may comprise particles having particle diameters of 600$\mu$m or more and less than 800,um, in the content of 12 wt% or less, or 11 wt% or less, or 10 wt% or less, or 8 wt% or less, or 6 wt% or less, or 5 wt% or less, or 4 wt% or less, and 0.5 wt% or more, or 1.0 wt% or more, or 1.5 wt% or more, and particles having particle diameters of 800$\mu$m or more, in the content of 1.0 wt% or less, or 0.9 wt% or less, or 0.8 wt% or less, or 0.7 wt% or less, or 0.6 wt% or less, or 0.5 wt% or less, or 0.4 wt% or less, and 0 wt% or more, or 0.1 wt% or more, or 0.2 wt% or more, based on total the weight of super absorbent polymer, and thus, have particle size distribution in which particles having large particle diameters are remarkably reduced.

And, despite the narrow particle size distribution in which the content of particles having particle diameters less than 150$\mu$m is 15 wt% or less, or 14 wt% or less, or 13 wt% or less, or 12 wt% or less, and 1 wt% or more, or 5 wt% or more, or 6 wt% or more, or 7 wt% or more, based on the total weight of super absorbent polymer, low fine particle generation may be exhibited.

The method for preparing super absorbent polymer according to the embodiment of the invention may further comprise a step of classifying the ground super absorbent polymer particles according to particle diameter, after the step of grinding the super absorbent polymer particles.

And, the method for preparing super absorbent polymer according to the embodiment of the invention may further comprise a surface crosslinking step in which a surface crosslink layer is formed on at least a part of the surfaces of the super absorbent polymer particles, in the presence of the surface crosslinking agent, after grinding and/or classifying the super absorbent polymer particles. By the surface crosslinking step, crosslinked polymer included in the super absorbent polymer particles is additionally crosslinked by the surface crosslinking agent, thus forming a surface crosslink layer on at least a part of the surfaces of the super absorbent polymer particles.

Hereinafter, the effects of the embodiments of the invention will be explained through plural Examples and Comparative Examples.

Examples 1 to 5 and Comparative Examples 1 to 4

(First preparation method of super absorbent polymer)

Based on 100 g of acrylic acid, 10 ppm of polyethyleneglycol diacrylate internal crosslinking agent, and 80 ppm of IRGACURE 819 photoinitiator were introduced and mixed to prepare a monomer solution. Subsequently, the monomer solution was continuously mixed with 123 g of an aqueous solution of 31.5% sodium hydroxide through a pump to prepare a neutralized monomer solution. Wherein, after confirming that the temperature of the neutralized monomer solution increased to about 72°C or more by neutralization heat, we waited until the temperature was decreased to 40°C. When the temperature was decreased to 40°C, 1000 ppm of solid phase capsule type blowing agent F-36D and 56 ppm of an aqueous solution of 28% lauryl sodium sulfate were added to the neutralized monomer solution, and simultaneously, 1250 ppm of sodium persulfate thermal initiator and 2400 ppm of ethylene glycol diglycidyl ether internal crosslinking agent were added. The solution was poured into a polymerization reactor equipped with a light irradiation apparatus and pre-heated to 80°C, and light irradiation was conducted to photoinitiate. After light irradiation for 1 minute, reaction was additionally conducted for 2 minutes to obtain hydrogel polymer in the form of sheet.

1600 g of the hydrogel polymer was cut to a size of about 3cm length, 3cm height, and mixed with 63 g of water, and then, poured into a chopper having a hole size of 16mm to chop the hydrogel polymer sheet. The chopped gel was dried by fixed-bed type drying at 180°C for 34 minutes in a convection dryer. And then, dried chips were coarsely ground through a cutter mill. Wherein, the average particle size was 2393$\mu$m.

(Comparative Example 1)

The super absorbent polymer obtained through the first preparation method was ground using one pair of first rollers(10) wherein the number of first corrugations(14) is 250(the number of corrugations per unit circumference is about 0.32/mm, H1 = 1190$\mu$m, P1 = 3.14mm) and the first roll gap(G1) is 0.3mm, and one pair of second rollers(20) wherein the number of second corrugations(24) is 500(the number of corrugations per unit circumference is about 0.64/mm, H2 = 530$\mu$m, P2 = 1.57mm) and the second roll gap(G2) is 0.2mm. And then, particle size distribution was analyzed using mesh type classification sieve.

(Comparative Example2)

The same process as Comparative Example 1 was conducted, except that the second roll gap(G2) was 0.15mm.

(Comparative Example3)

The same process as Comparative Example 1 was conducted, except that the second roll gap(G2) was 0.10mm.

(Example 1)

The same process as Comparative Example 1 was conducted, except using one pair of second rollers(20) wherein the number of second corrugations(24) is 800(the number of corrugations per unit circumference is about 1.02/mm, H2 = 310$\mu$m, P2 = 0.98mm), and the second roll gap(G2) is 0.25mm.

(Comparative Example 4)

The same process as Example 1 was conducted, except that the second roll gap(G2) was 0.30mm.

(Example 2)

The same process as Example 1 was conducted, except that the second roll gap(G2) was 0.20mm.

(Example 3)

The same process as Example 1 was conducted, except that the second roll gap(G2) was 0.15mm.

(Example 4)

The same process as Example 1 was conducted, except that the second roll gap(G2) was 0.10mm.

(Example 5)

The same process as Example 4 was conducted, except using one pair of first rollers(10) wherein the number of first corrugations(14) is 250(the number of corrugations per unit circumference is about 0.32/mm, H2 = 1190$\mu$m, P2 = 3.14mm), and the first roll gap(G2) is 0.2mm.

<Experimental Example>

For the super absorbent polymers obtained in Examples and Comparative Examples, properties were measured as follows.

In the following, evaluations of centrifuge retention capacity, vortex time, and one minute absorption capacity were conducted for super absorbent polymer having particle diameter of 300$\mu$m ~ 425$\mu$m.

(1) Centrifuge retention capacity(CRC)

For each polymer, centrifuge retention capacity by absorption rate under no load was measured according to EDANA WSP 241.3.

Specifically, $W_0$(g) (about 0.2g) of super absorbent polymer was uniformly put in an envelope made of non-woven fabric, and sealed, and then, soaked in physiological saline (0.9 wt%) at room temperature. After 30 minutes, the envelop was drained under 250G for 3 minutes using a centrifuge, and the weight of the envelope, $W_2$(g), was measured. And, the same operation was conducted without polymer, and the weight at that time, $W_1$(g), was measured. Using the obtained masses, CRC(g/g) was calculated according to the following Calculation Formula 1.

$$[\text{Calculation Formula 1}]$$

$$\text{CRC (g/g)} = \{[W_2(g) - W_1(g)]/W_0(g)\} - 1$$

(2) Vortex time

A vortex time was measured according to Japanese Standard Method(JIS K 7224).

Specifically, in 50 mL of physiological saline of 25°C, 2g of super absorbent polymer was introduced, and stirred with a magnetic bar(diameter 8 mm, length 31.8 mm) at 600 rpm, and a time taken until vortex disappeared was measured as the unit of seconds, to calculate a vortex time.

(3) One minute absorption capacity

1.0 g($W_3$) of super absorbent polymer was put in a non-woven fabric envelope(15 cm $\times$ 15 cm), and soaked in 500 mL of distilled water of 24°C for 1 minute. After 1 minute, the envelope was taken out of the distilled water, and then, hung and left for 1 minute. And then, the weight($W_4$) of the envelope was measured. And, the same operation was conducted without using super absorbent polymer, and then, the weight $W_5$(g) at that time was measured.

Using the obtained masses, one minute absorption capacity(g/g) was calculated according to the following Calculation Formula 2.

$$[\text{Calculation Formula 2}]$$

$$\text{One minute absorption capacity(distilled water)} = \{[W_4(g) - W_5(g) - W_3(g)]/W_3(g)\}$$

(4) Weight average particle diameter(D50)

Weight average particle diameter(D50) was measured according to ERT420.2-02.

(5) Particle size distribution

The weight of super absorbent polymer classified according to particle size using a classification apparatus was measured.

In Examples 1 to 5 and Comparative Examples 1 to 4, particle size distribution and properties (centrifuge retention capacity, vortex time, one minute absorption capacity) are as shown in the following Table 1 and Table 2.

[Table 1]

| | | Comparative Example 1 | Comparative Example 2 | Comparative Example 3 | Comparative Example 4 |
|---|---|---|---|---|---|
| First rolls | Number of corrugations (number of corrugations/unit circumference) | 250 (0.32/mm) | | | |
| | First roll gap(mm) | 0.30 | | | |

(continued)

| | | Comparative Example 1 | Comparative Example 2 | Comparative Example 3 | Comparative Example 4 |
|---|---|---|---|---|---|
| Second rolls | Number of corrugations (number of corrugations//unit circumference) | 500 (0.64/mm) | | | 800 (1.02/mm) |
| | Second roll gap(mm) | 0.20 | 0.15 | 0.10 | 0.30 |
| Particle size distribution | 800$\mu$m or more | 1.8 | 0.9 | 0.9 | 1.3 |
| | 600$\mu$m or more and less than 800$\mu$m | 26.5 | 19.0 | 19.4 | 20.5 |
| | 500$\mu$m or more and less than 600$\mu$m | 16.2 | 16.7 | 17.1 | 19.8 |
| | 400$\mu$m or more and less than 500$\mu$m | 17.1 | 19.8 | 20.2 | 20.8 |
| | 300$\mu$m or more and less than 400$\mu$m | 13.1 | 15.9 | 15.9 | 13.8 |
| | 200$\mu$m or more and less than 300$\mu$m | 9.7 | 11.4 | 10.9 | 9.6 |
| | 150$\mu$m or more and less than 200$\mu$m | 4.4 | 4.9 | 4.7 | 4.3 |
| | less than 150$\mu$m | 11.2 | 11.5 | 11.0 | 10.0 |
| | Weight average particle diameter(D50) ($\mu$m) | 456 | 424 | 429 | 446 |
| Properties | Centrifuge retention capacity(g/g) | 36.0 | 36.0 | 36.0 | 36.0 |
| | vortex(seconds) | 56 | 51 | 52 | 54 |
| | One minute absorption capacity(g/g) | 107 | 115 | 113 | 106 |

[Table 2]

| | | Example 1 | Example 2 | Example 3 | Example 4 | Example 5 |
|---|---|---|---|---|---|---|
| First rolls | Number of corrugations (number of corrugations/circumference) | 250 (0.32/mm) | | | | |
| | First roll gap(mm) | 0.30 | | | | 0.20 |
| Second rolls | Number of corrugations (number of corrugations/circumference) | 800 (1.02/mm) | | | | |
| | Second roll gap(mm) | 0.25 | 0.20 | 0.15 | 0.10 | 0.10 |
| Particle size distribution | 800$\mu$m or more | 0.7 | 0.3 | 0.2 | 0.1 | 0.1 |
| | 600$\mu$m or more and less than 800$\mu$m | 10.4 | 4.1 | 3.3 | 1.1 | 2.3 |
| | 500$\mu$m or more and less than 600$\mu$m | 19.7 | 14.5 | 12.1 | 3.5 | 10.3 |
| | 400$\mu$m or more and less than 500$\mu$m | 25.7 | 29.3 | 27.7 | 23.3 | 27.1 |

(continued)

|  |  | Example 1 | Example 2 | Example 3 | Example 4 | Example 5 |
|---|---|---|---|---|---|---|
|  | 300$\mu$m or more and less than 400$\mu$m | 17.3 | 22.9 | 24.7 | 34.8 | 25.4 |
|  | 200$\mu$m or more and less than 300$\mu$m | 11.1 | 12.2 | 13.7 | 18.1 | 14.5 |
|  | 150$\mu$m or more and less than 200$\mu$m | 4.5 | 5.2 | 5.8 | 6.1 | 6.0 |
|  | Less than 150$\mu$m | 10.7 | 11.4 | 12.6 | 13.0 | 14.1 |
|  | Weight average particle diameter(D50) ($\mu$m) | 408 | 372 | 357 | 320 | 342 |
| Properties | Centrifuge retention capacity(g/g) | 36.0 | 36.0 | 35.9 | 35.9 | 35.9 |
| Properties | Vortex(seconds) | 49 | 43 | 41 | 35 | 39 |
| Properties | One minute absorption capacity(g/g) | 115 | 124 | 131 | 144 | 137 |

Referring to Table 1 and Table 2, in Comparative Example 1 to Comparative Example 3 wherein the number of second corrugations(24) is 500(the number of corrugations per unit circumference is about 0.64/mm), particles of 300$\mu$m ~ 800$\mu$m are mainly produced, but in Example 1 to Example 5 wherein the number of second corrugations(24) is 800(the number of corrugations per unit circumference is about 1.02/mm), particles of 300$\mu$m ~ 500$\mu$m are mainly produced. Namely, if the number of second corrugations(24) increases from 500 to 800 (i.e., the number of corrugations per unit circumference increases from about 0.64/mm to 1.02/mm), particle size decreases and particle size distribution becomes narrow, and thus, the properties between products becomes uniform and surface treatment is facilitated. Particularly, vortex time less than 50 seconds and one minute absorption capacity of 115 g/g or more can be obtained without difference in centrifuge retention capacity.

Meanwhile, in the case of Comparative Example 4, the number of second corrugations(24) is 800(the number of corrugations per unit circumference is about 1.02/mm), but the second roll gap(G2) is 0.30mm, which is relatively large. Thus, in Comparative Example 4, particles of 300$\mu$m ~ 800$\mu$m are mainly produced, and vortex time is about 54 seconds, which is relatively slow, and one minute absorption capacity is about 106g/g, which is relatively small. Thus, it can be seen even if the number of second corrugations(24) is increased, the second roll gap(G2) should be set 0.25mm or less, preferably 0.20mm or less.

And, in the case of Example 5, the first roll gap(G1) is 0.20mm and the second roll gap(G2) is 0.10mm, which are the smallest, but fine particles less than 150$\mu$m are generated in the amount of 14.1%. The amount of fine particles generated in Example 5 is increased only by 3%, compared to Comparative Example 4 wherein the amount of fine particles generated is the smallest. To the contrary, the average particle size of Example 5 decreases by about 25% compared to the average particle size of Comparative Example 4, and thus, vortex time decreases by about 28%, and one-minute absorption capacity increases by about 30%. Namely, according to the embodiment of the invention, vortex time can be decreased and one-minute absorption capacity can be increased, without significant difference in the amount of fine particles generated.

And, comparing Comparative Example 2(amount of fine particles: 11.5%) and Example 2(amount of fine particles: 11.4%) having similar amount of fine particles generated, particles of 600$\mu$m or more are generated in the amount of 19.9% in in Comparative Example 2, and in the amount of 4.4% in Example 2. Namely, according to the embodiment of the invention, at similar fine particle generation amount, the average size of particles can be reduced, and a narrow particle size distribution can be realized.

In summary, if the size of particles introduced in the roll mill is relatively large(for example, 1850$\mu$m or more), it is preferable that the number of first corrugations(14) of the first rollers(10) is about 200 ~ about 300(the number of corrugations per unit circumference is about 0.25/mm ~ about 0.38/mm), and the number of second corrugations(24) of the second rollers(20) is about 700 ~ about 900(the number of corrugations per unit circumference is about 0.89/mm ~ about 1.15/mm). Namely, it is preferable that the first height(H1) of the first corrugations(14) is 950$\mu$m ~ about 1400$\mu$m and the first pitch(P1) of the first corrugations(14) is about 2.62mm ~ about 3.93mm, and the second height(H2) of the second corrugations(24) is about 276$\mu$m ~ about 354$\mu$m and the second pitch(P2) of the second corrugations(24) is about 0.87mm ~ about 1.12mm.

And, it is preferable that the first roll gap(G1) is about 0.20mm ~ about 0.30mm, and the second roll gap(G2) is about 0.10mm ~ about 0.25mm, more preferably about 0.10mm ~ about 0.20mm.

Comparative Examples 5 to 7 and Example 6

(Second preparation method of super absorbent polymer)

Based on 100 g of acrylic acid, 6000 ppm of polyethyleneglycol diacrylate internal crosslinking agent, 60 ppm of AMA, 80 ppm of IRGACURE 819 photoinitiator, and 80 ppm of S-570 stabilizer were introduced and mixed to prepare a monomer solution. Subsequently, the monomer solution was continuously mixed with 167.5 g of an aqueous solution of 22.4% sodium hydroxide through a pump to prepare a neutralized monomer solution. Wherein, after confirming that the temperature of the neutralized monomer solution increased to about 72°C or more by neutralization heat, we waited until the temperature was decreased to 40°C. When the temperature was decreased to 40°C, 2000 ppm of sodium bicarbonate blowing agent and 2500 ppm of sodium persulfate thermal initiator were added. The solution was poured into a polymerization reactor equipped with a light irradiation apparatus and pre-heated to 80°C, and light irradiation was conducted to photoinitiate. After light irradiation for 1 minute, reaction was additionally conducted for 2 minutes to obtain hydrogel polymer in the form of sheet.

1600 g of the hydrogel polymer was cut to a size of 3cm length, 3cm height, and then, mixed with 63 g of water containing 3000 ppm of sodium stearoyl lactylate, and then, poured into a chopper having a hole size of 3mm to chop the hydrogel polymer sheet two times. The chopped gel was dried by moving type drying to 205°C in a paddle type dryer. Wherein, the average particle size was 1319$\mu$m.

(Comparative Example 5)

The super absorbent polymer obtained by the second preparation method was ground using one pair of first rollers wherein the number of first corrugations(14) is 250(the number of corrugations per unit circumference is about 0.32/mm, H1 = 1190$\mu$m, P1 = 3.14mm), and the first roll gap(G1) is 0.3mm. And then, particle size distribution was analyzed using a mesh type classification sieve.

(Comparative Example 6)

The super absorbent polymer obtained by the second preparation method was ground using one pair of first rollers wherein the number of first corrugations(14) is 250(the number of corrugations per unit circumference is about 0.32/mm, H1 = 1190$\mu$m, P1 = 3.14mm), and the first roll gap(G1) is 0.3mm, and one pair of second rollers(20) wherein the number of second corrugations(24) is 500(the number of corrugations per unit circumference is about 0.64/mm, H2 = 530$\mu$m, P2 = 1.57mm), and the second roll gap(G2) is 0.2mm. And then, particle size distribution was analyzed using a mesh type classification sieve.

(Comparative Example 7)

The same process as Comparative Example 5 was conducted, except that the number of the first corrugations(14) is 500(the number of corrugations per unit circumference is about 0.64/mm, H1 = 530$\mu$m, P1 = 1.57mm), and the first roll gap(G1) is 0.2mm.

(Example 6)

The same process as Comparative Example 5 was conducted, except that the number of the first corrugations(14) is 800(the number of corrugations per unit circumference is about 1.02/mm, H1 = 310$\mu$m, P1 = 0.98mm), and the first roll gap(G1) is 0.2mm.

In Comparative Examples 5 to 7 and Example 6, particle size distributions are as shown in the following Table 3.

[Table 3]

| | | Comparative Example5 | Comparative Example6 | Comparative Example7 | Example6 |
|---|---|---|---|---|---|
| First roller | Number of corrugations (number of corrugations/unit circumference) | 250 (0.32/mm) | | 500 (0.64/mm) | 800 (1.02/mm) |
| | First roll gap(mm) | 0.3 | | 0.2 | 0.2 |

(continued)

| | | Comparative Example5 | Comparative Example6 | Comparative Example7 | Example6 |
|---|---|---|---|---|---|
| Second rollers | Number of corrugations (number of corrugations/unit circumference) | - | 500 (0.64/mm) | - | - |
| | Second roll gap(mm) | | 0.2 | | |
| Particle size distribution | 800$\mu$m or more | 51 | 1 | 2 | 0 |
| | 600$\mu$m or more and less than 800$\mu$m | 20 | 18 | 25 | 5 |
| | 400$\mu$m or more and less than 600$\mu$m | 13 | 41 | 38 | 60 |
| | 300$\mu$m or more and less than 400$\mu$m | 6 | 16 | 13 | 17 |
| | 150$\mu$m or more and less than 300$\mu$m | 6 | 17 | 15 | 12 |
| | Less than 150$\mu$m | 3.0 | 5.9 | 6.0 | 5.3 |
| | Weight average particle diameter(D50) ($\mu$m) | 810 | 448 | 494 | 431 |

Referring to Table 3, it can be seen that in Comparative Example 5 wherein the number of first corrugations(14) is 250(the number of corrugations per unit circumference is about 0.32/mm) and the first roll gap(G1) is 0.3mm, and Comparative Example 7 wherein the number of first corrugations(14) is 500(the number of corrugations per unit circumference is about 0.64/mm) and the first roll gap(G1) is 0.2mm, particles of 600$\mu$m or more are generated in the amount of 71% and 27%, respectively, and the average particle sizes are respectively 810$\mu$m, 494$\mu$m, which are relatively large.

To the contrary, it can be seen that in Example 6 wherein the number of first corrugations(14) is 800(the number of corrugations per unit circumference is about 1.02/mm) and the first roll gap(G1) is 0.2mm, particles of 600$\mu$m or more are generated in the amount of 5%, and the average particle size is 431$\mu$m, which is relatively small. Thus, even if one pair of rollers are used, the average particle size can be reduced by increasing the number of first corrugations(14)(i.e., the number of first corrugations(14) per unit circumference) and maintaining the first roll gap(G1) as 0.2mm. Commonly, if the average particle size decreases, there is no significant difference in centrifuge retention capacity, but vortex becomes significantly rapid and one-minute absorption capacity significantly increases.

Meanwhile, in Comparative Example 6 wherein the number of first corrugations(14) is 250(the number of corrugations per unit circumference is about 0.32/mm) and the first roll gap(G1) is 0.3mm, and the number of second corrugations(24) is 500(the number of corrugations per unit circumference is about 0.64/mm) and the second roll gap(G2) is 0.2mm, particles of 600$\mu$m or more are generated in the amount of 19%, and the average particle size is 448$\mu$m. Namely, compared to the case of using two pairs of first, second rollers(10,20) having corrugation number of 500(the number of corrugations per unit circumference is about 0.64/mm), when using one pair of first rollers(10) having corrugation number of 800(the number of corrugations per unit circumference is about 1.02/mm), generation of large particles may be reduced (namely, particle size distribution becomes uniform), and the average particle size may be decreased.

In summary, if the size of particles introduced in the roll mill is relatively small(for example, less than 1850$\mu$m), a roll mill comprising only one pair of first rollers(10) can be used. However, it is preferable that the number of first corrugations(14) of the first roller(10) is about 700 ~ about 900(the number of corrugations per unit circumference is about 0.89/mm ~ about 1.15/mm). It is preferable that the first height(H1) of the first corrugations(14) is about 276$\mu$m ~ about 354$\mu$m, and the first pitch(P1) of the first corrugations(14) is about 0.87mm ~ about 1.12mm. It is also preferable that the first roll gap(G1) is about 0.10mm ~ about 0.25mm, more preferably 0.10mm ~ about 0.20mm.

Although preferable embodiments of the invention have been explained, the invention is not limited to the embodiments, and includes all the modifications within a range easily modified from the embodiments of the invention by a person having ordinary knowledge in the art and recognized as being equivalent.

**Description of symbols**

| | | | |
|---|---|---|---|
| 10, 20: | first, second rollers | 12, 22: | first, second rotation axes |
| 14, 24: | first, second corrugations | 30: | particles |
| G1, G2: | first, second roll gaps | D1, D2: | first, second diameters |
| H1, H2: | first, second heights | P1, P2: | first, second pitches |

**Claims**

1. A roll mill for super absorbent polymer which grinds introduced super absorbent polymer particles and discharges them,

   said roll mill comprising one pair of first rollers (20) that have plural first corrugations (24) formed on each outer perimeter surface, and are arranged parallel to each other while being spaced by a first roll gap (G2),
   wherein the plural first corrugations (24) are formed on the outer perimeter surface of the first rollers (20),
   further comprising another pair of second rollers (10) arranged upstream of said one pair of first rollers (20) according to the size of introduced super absorbent polymer particles, and
   wherein said another pair of second rollers (10) have different plural corrugations (14) formed on each outer perimeter surface, and are arranged parallel to each other while being spaced by different roll gap (G1),
   wherein the first roll gap (G2) is 0.10mm ~ 0.25mm **characterized in that**
   the number of first corrugations (24) per unit circumference of the first rollers (20) is 0.89/mm ~ 1.15/mm, and the number of different corrugations (14) per unit circumference of each second roller (10) is 0.25/mm ~ 0.38/mm.

2. The roll mill for super absorbent polymer according to claim 1, wherein the height of the first corrugation (H2) is 276$\mu$m ~ 354$\mu$m, and the pitch of the first corrugation (P2) is

3. The roll mill for super absorbent polymer according to claim 1, wherein the first rol gap (G2) is 0.10mm ~ 0.20mm.

4. The roll mill for super absorbent polymer according to claim 1, wherein the height of the different corrugation (H1) is 950$\mu$m ~ 1400$\mu$m, and the pitch of the different corrugation is 2.62mm ~ 3.93mm.

5. The roll mill for super absorbent polymer according to claim 1, wherein the different roll gap (G1) is 0.20mm ~ 0.30mm.

6. A method for preparing super absorbent polymer, comprising steps of:

   polymerizing a monomer composition comprising water soluble ethylenically unsaturated monomers having at least partially neutralized acid groups, an internal crosslinking agent, and a polymerization initiator to prepare hydrogel polymer;
   chopping or micronizing the hydrogel polymer;
   drying the micronized hydrogel polymer to prepare dried super absorbent polymer particles; and
   grinding dried super absorbent polymer particles;
   wherein the grinding step is conducted using the roll mill according to any one of claims 1 to 5.

7. A method for preparing super absorbent polymer, comprising steps of:

   polymerizing a monomer composition comprising water soluble ethylenically unsaturated monomers having acid groups, an internal crosslinking agent, and a polymerization initiator to prepare hydrogel polymer;
   neutralizing at least a part of the acid groups of the polymer;
   micronizing the polymer in the presence of a surfactant to prepare hydrated super absorbent polymer particles;
   drying the hydrated super absorbent polymer particles to prepare dried super absorbent polymer particles; and
   grinding dried super absorbent polymer particles;
   wherein the grinding step is conducted using the roll mill according to any one of claims 1 to 5.

**Patentansprüche**

1. Walzwerk für superabsorbierendes Polymer, welches eingeleitete superabsorbierende Polymerpartikel mahlt und diese abführt,

   wobei das Walzwerk ein Paar erster Walzen (20) umfasst, welche eine Mehrzahl erster Riffelungen (24) aufweisen, welche an jeder äußeren Umfangsfläche gebildet sind, und parallel zueinander angeordnet sind, während sie um einen ersten Walzenspalt (G2) beabstandet sind,
   wobei die Mehrzahl erster Riffelungen (24) an der äußeren Umfangsfläche der ersten Walzen (20) gebildet sind, ferner umfassend ein weiteres Paar zweiter Walzen (10), welche dem einen Paar erster Walzen (20) gemäß der Größe der eingeleiteten superabsorbierenden Polymerpartikel vorgeschaltet sind, und
   wobei das andere Paar zweiter Walzen (10) andere Riffelungen (14) aufweisen, welche an jeder äußeren Umfangsfläche gebildet sind, und parallel zueinander angeordnet sind, während sie um einen anderen Walzenspalt (G1) beabstandet sind,
   wobei der erste Walzenspalt (G2) 0,10 mm - 0,25 mm beträgt,
   **dadurch gekennzeichnet, dass** die Anzahl erster Riffelungen (24) pro Einheitsumfang der ersten Walzen (20) 0,89/mm - 1,15/mm beträgt, und
   dass die Anzahl anderer Riffelungen (14) pro Einheitsumfang jeder zweiten Walze (10) 0,25/mm - 0,38/mm beträgt,

2. Walzwerk für superabsorbierendes Polymer nach Anspruch 1, wobei die Höhe der ersten Riffelung (H2) 276 $\mu$m - 354 $\mu$m beträgt, und wobei die Teilung der ersten Riffelung (P2) 0,87 mm ~ 1,12 mm beträgt.

3. Walzwerk für superabsorbierendes Polymer nach Anspruch 1, wobei der erste Walzenspalt (G2) 0,10 mm - 0,20 mm beträgt.

4. Walzwerk für superabsorbierendes Polymer nach Anspruch 1, wobei die Höhe der anderen Riffelung (H1) 950 $\mu$m ~ 1400 $\mu$m beträgt, und wobei die Teilung der anderen Riffelung 2,62 mm - 3,93 mm beträgt.

5. Walzwerk für superabsorbierendes Polymer nach Anspruch 1, wobei der andere Walzenspalt (G1) 0,20 mm - 0,30 mm beträgt.

6. Verfahren zur Herstellung eines superabsorbierenden Polymers, welches die Schritte umfasst aus:

   Polymerisieren einer Monomerzusammensetzung, welche wasserlösliche ethylenisch ungesättigte Monomere mit wenigstens teilweise neutralisierten Säuregruppen, ein internes Vernetzungsmittel und einen Polymerisationsinitiator umfasst, um Hydrogelpolymer herzustellen;
   Zerkleinern oder Mikronisieren des Hydrogelpolymers;
   Trocknen des mikronisierten Hydrogelpolymers, um getrocknete superabsorbierende Polymerpartikel herzustellen; und
   Mahlen der getrockneten superabsorbierenden Polymerpartikel;
   wobei der Mahlschritt unter Verwendung des Walzwerks nach einem der Ansprüche 1 bis 5 durchgeführt wird.

7. Verfahren zur Herstellung eines superabsorbierenden Polymers, welches die Schritte umfasst aus:

   Polymerisieren einer Monomerzusammensetzung, welche wasserlösliche ethylenisch ungesättigte Monomere mit Säuregruppen, ein internes Vernetzungsmittel und einen Polymerisationsinitiator umfasst, um Hydrogelpolymer herzustellen;
   Neutralisieren wenigstens eines Teils der Säuregruppen des Polymers;
   Mikronisieren des Polymers in der Gegenwart eines Tensids, um hydratisierte superabsorbierende Polymerpartikel herzustellen;
   Trocknen der hydratisierten superabsorbierenden Polymerpartikel, um getrocknete superabsorbierende Polymerpartikel herzustellen; und
   Mahlen der getrockneten superabsorbierenden Polymerpartikel;
   wobei der Mahlschritt unter Verwendung des Walzwerks nach einem der Ansprüche 1 bis 5 durchgeführt wird.

**Revendications**

1. Laminoir pour polymère super absorbant qui broie des particules de polymère super absorbant introduites et les refoule,

   ledit laminoir comprenant une paire de premiers cylindres (20) qui possèdent plusieurs premières ondulations (24) formées sur chaque surface périmétrique externe, et sont agencés parallèlement l'un à l'autre tout en étant espacés d'un premier écartement entre cylindres (G2),
   dans lequel les plusieurs premières ondulations (24) sont formées sur la surface périmétrique externe des premiers cylindres (20),
   comprenant en outre une autre paire de seconds cylindres (10) agencés en amont de ladite une paire de premiers cylindres (20) selon la taille de particules de polymère super absorbant introduites, et
   dans lequel ladite autre paire de seconds cylindres (10) possèdent plusieurs ondulations (14) différentes formées sur chaque surface périmétrique externe, et sont agencés parallèlement l'un à l'autre tout en étant espacés d'un écartement entre cylindres (G1) différent,
   dans lequel le premier écartement entre cylindres (G2) est de 0,10 mm à 0,25 mm
   **caractérisé en ce que** le nombre de premières ondulations (24) par unité de circonférence des premiers cylindres (20) est de 0,89/mm à 1,15/mm, et
   le nombre d'ondulations (14) différentes par unité de circonférence de chaque second cylindre (10) est de 0,25/mm à 0,38/mm.

2. Laminoir pour polymère super absorbant selon la revendication 1, dans lequel la hauteur de la première ondulation (H2) est de 276 μm à 354 μm, et le pas de la première ondulation (P2) est de 0,87 mm à 1,12 mm.

3. Laminoir pour polymère super absorbant selon la revendication 1, dans lequel le premier écartement entre cylindres (G2) est de 0,10 mm à 0,20 mm.

4. Laminoir pour polymère super absorbant selon la revendication 1, dans lequel la hauteur de l'ondulation (H1) différente est de 950 μm à 1400 μm, et le pas de l'ondulation différente est de 2,62 mm à 3,93 mm.

5. Laminoir pour polymère super absorbant selon la revendication 1, dans lequel l'écartement entre cylindres (G1) différent est de 0,20 mm à 0,30 mm.

6. Procédé de préparation de polymère super absorbant, comprenant les étapes de :

   la polymérisation d'une composition de monomère comprenant des monomères éthyléniquement insaturés solubles dans l'eau ayant des groupes acide au moins partiellement neutralisés, un agent de réticulation interne et un initiateur de polymérisation pour préparer un polymère sous forme d'hydrogel ;
   le hachage ou la micronisation du polymère sous forme d'hydrogel ;
   le séchage du polymère sous forme d'hydrogel micronisé pour préparer des particules de polymère super absorbant séchées ; et
   le broyage des particules de polymère super absorbant séchées ;
   dans lequel l'étape de broyage est effectuée à l'aide du laminoir selon l'une quelconque des revendications 1 à 5.

7. Procédé de préparation de polymère super absorbant, comprenant les étapes de :

   la polymérisation d'une composition de monomère comprenant des monomères éthyléniquement insaturés solubles dans l'eau ayant des groupes acide, un agent de réticulation interne et un initiateur de polymérisation pour préparer un polymère sous forme d'hydrogel ;
   la neutralisation d'au moins une partie des groupes acide du polymère ;
   la micronisation du polymère en présence d'un tensioactif pour préparer des particules de polymère super absorbant hydratées ;
   le séchage des particules de polymère super absorbant hydratées pour préparer des particules de polymère super absorbant séchées ; et
   le broyage des particules de polymère super absorbant séchées ;
   dans lequel l'étape de broyage est effectuée à l'aide du laminoir selon l'une quelconque des revendications 1 à 5.

FIG. 1

FIG. 2

**EP 4 249 124 B1**

**Patent documents cited in the description**

- KR 20120047035 A